# EUROPÄISCHE PATENTANMELDUNG

(11) **EP 1 170 050 A1**
(43) Veröffentlichungstag der Anmeldung: **09.01.2002**
(21) Anmeldenummer: 01115901.9
(22) Anmeldetag: 29.06.2001
(51) Int. Cl.: B01D 53/04

(54) **Verfahren zur Regenerierung von mit organischen Substanzen beladenen elektrisch leitfähigen Adsorbentien**

(30) Priorität: 06.07.2000 DE 10032385
(71) Anmelder: M+W Zander Facility Engineering GmbH, 70499 Stuttgart (DE)
(72) Erfinder: Chmiel, Horst, Prof. Dr.-Ing, 66123 Saarbrücken (DE); Schippert, Egbert, Dr., 66117 Saarbrücken (DE); Möhner, Cornelia, 66113 Saarbrücken (DE)
(74) Vertreter: Kohl, Karl-Heinz

(57) **Zusammenfassung**

Das Verfahren dient zur Regenerierung von mit organischen Substanzen beladenen, elektrisch leitfähigen Adsorbentien, die durch Durchleitung von elektrischem Strom aufgeheizt werden. Das Adsorbens wird hierbei abwechselnd zeitlich nacheinander durch Durchleitung von elektrischem Strom aufgeheizt, wobei kein Spülgasstrom durch das Adsorbens geführt wird. Anschließend wird bei abgestelltem elektrischem Strom ein Spülgasstrom durch das Adsorbens geleitet, wodurch gleichzeitig die adsorbierten organischen Substanzen ausgetrieben werden und das Adsorbens gekühlt wird.

## Beschreibung

Die Erfindung betrifft ein Verfahren zur Regenerierung von mit organischen Substanzen beladenen elektrisch leitfähigen Adsorbentien, die durch Durchleitung von elektrischem Strom aufgeheizt werden.

Verfahren zur Abscheidung von organischen gasförmigen Stoffen aus Abgasströmen durch Adsorption an Adsorbentien, insbesondere an Aktivkohle, werden seit vielen Jahren industriell eingesetzt, so zum Beispiel in Anlagen zur Lösemittelrückgewinnung. Als Aktivkohle werden dabei überwiegend Festbettgranulatschüttungen verwendet. Seltener wird faserförmige Aktivkohle in Form von Matten, wie zum Beispiel Vliesen, Geweben oder Gestricken, die zu Ringadsorbern gewickelt oder in Rahmenkonstruktionen eingespannt sind, eingesetzt. Der Gesamtprozeß der Abgasreinigung durch Adsorption erfolgt in der Regel in drei Hauptschritten: dem Beladeschritt, dem Regenerationsschritt und dem Kühlschritt. Beim Beladeschritt wird das Adsorbens vom zu reinigenden Abgas durchströmt und bindet bei diesem Vorgang die organischen Stoffe in seiner inneren Porenstruktur. Im Laufe des Beladevorganges wandert dabei die Front der Beladung in Strömungsrichtung durch den Adsorber. Wenn das Adsorbens am in Strömungsrichtung gesehenen Ende des Adsorbers so weit beladen ist, dass die Reingaskonzentration einen vorgegebenen Grenzwert erreicht, wird der Beladevorgang dieses Adsorbers beendet und auf einen anderen frisch regenerierten Adsorber umgeschaltet. Aus wirtschaftlichen Gründen wird in der Regel angestrebt, das beladene Adsorbens zu regenerieren. Allerdings sind auch zahlreiche Fälle bekannt, bei denen eine Regeneration nicht möglich oder nicht wirtschaftlich ist. Dies ist insbesondere dann der Fall, wenn die Konzentration der organischen Stoffe sehr klein ist, wie zum Beispiel in der Zuluft für Gebäude oder in der Kreislaufluft von Klimaanlagen von Gebäuden. In diesen Fällen wird das beladene Adsorbens entsorgt und durch neues ersetzt.

Da die Adsorption ein reversibler Prozeß ist, können die gebundenen organischen Stoffe vom Adsorbens im Regenerationsschritt wieder entfernt werden, indem die Gleichgewichtsbedingungen geändert werden. Dies kann beispielsweise dadurch erfolgen, dass das Adsorbens erhitzt wird und die adsorbierten organischen Stoffe durch einen Spülgasstrom vom Adsorbens ausgetrieben werden. Dieses Verfahren wird beispielsweise bei den wasserdampfregenerierten und inertgasregenerierten Aktivkohleadsorptionsanlagen angewendet. In beiden Fällen dient das Spülgas gleichzeitig als Heizmedium für das Adsorbens. Aufheizung des Adsorbens und Desorption der organischen Stoffe sind also untrennbar gekoppelt. Wegen dieser indirekten Aufheizung des beladenen Adsorbens mit dem Spülgas sind sehr große Volumenströme des Spülgases erforderlich. Im Falle der Regeneration mit Wasserdampf muß dieser nach Austritt aus dem Adsorber gemeinsam mit den vom Adsorbens desorbierten organischen Stoffen kondensiert werden. Das entstehende Kondensat muß dann anschließend in aufwendigen Prozessen, zum Beispiel durch Rektifikation, so aufgearbeitet werden, dass Wasser und organische Stoffe separiert werden. Die Inertgasregeneration, bei der in der Regel Stickstoff als Inertgas verwendet wird, ist noch aufwendiger als die Wasserdampfregeneration, weil hier der Stickstoff über den Adsorber im Kreislauf geführt wird und dieser im Kondensationsschritt sehr tief gekühlt werden muß, damit die desorbierten organischen Stoffe kondensieren und die Restbeladung des Adsorbens am Ende des Regenerationsschritts so niedrig ist, dass die gewünschte Reingaskonzentration im nachfolgenden Beladeschritt eingehalten werden kann.

Dadurch, dass die Aufheizung des Adsorbens durch das Inertgas wegen dessen geringer Wärmekapazität nur sehr langsam erfolgt und dass große Strömungsgeschwindigkeiten, die zwischen 0,1 und 0,5 m/s liegen, erforderlich sind, können mit diesem Verfahren Anreicherungsfaktoren (= maximale Regenerationsgaskonzentration/Rohgaskonzentration) von nur etwa 40 erreicht werden. Eine schon wesentliche Verbesserung kann erreicht werden, wenn das Adsorbens nicht indirekt durch das Spülgas, sondern direkt durch Durchleitung von elektrischem Strom aufgeheizt wird. In diesem Fall kann wegen der Entkoppelung der Vorgänge Aufheizen und Spülen die Spülgasmenge wesentlich reduziert werden und können wesentlich höhere Anreicherungsfaktoren erreicht werden.

So ist aus der DE 195 13 376 A1 eine Vorrichtung zur Rückgewinnung von organischen Lösemitteln bekannt, die aus einem ringförmigen, mit Aktivkohlegranulat gefüllten, elektrisch aufheizbaren Festbett besteht, welches zur Adsorption des Lösemittels zunächst von dem Abgasstrom und anschließend zur Desorption bzw. Regenerierung mit dem Regeneriergas beaufschlagt wird. Bei dieser Vorrichtung besteht der äußere und innere Mantel des ringförmigen Festbettes aus einem die Elektroden bildenden Gittermetall. Mit diesem Verfahren können Anreicherungsfaktoren von 120 erreicht werden und damit die erforderlichen Spülgasvolumenströme auf 5 bis 10 % der Rohgasvolumenströme reduziert werden. Bei den dann bezogen auf die Anströmfläche des Kohlebetts sehr kleinen spezifischen Gasmengen kann eine für eine gute Regeneration erforderliche gleichmäßig Beaufschlagung der Kohle mit Spülgas nur erreicht werden, wenn diese zentral im Inneren des Adsorbers zum Beispiel durch ein Verteilerrohr mit zahlreichen feinen Bohrungen erfolgt. Nachteilig für die Beladestandzeit und die Qualität der Reingaskonzentrationen bei diesem Verfahren ist, dass der Regenerationsgasstrom selbst durch die Aktivkohle aufgeheizt wird und bei der Regenerierung von innen nach außen deshalb die Kohle in der innersten Kohleschicht eine wesentlich niedrigere Regenerationstemperatur erreicht als in der äußeren Schicht. Als Folge hiervon wird die innerste Kohleschicht nur unzureichend regeneriert und es können somit keine sehr niedrigen Reingaskonzentrationen beim Beladeschritt erreicht werden von zum Beispiel einigen µg/m³, wie sie beispielsweise bei der Zuluft für Reinsträume erforderlich sind.

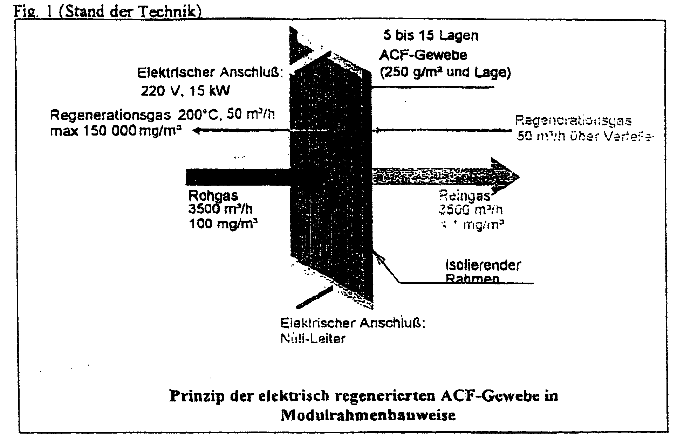

Aus der Patentschrift DE 41 04 513 C2 ist ein Adsorber bekannt, der ebenfalls direkt mit elektrischem Strom aufgeheizt wird, der dadurch gekennzeichnet ist, dass als adsorbierendes Material faserförmige Aktivkohle verwendet wird, die beispielsweise in Form von Matten vorliegt. Eine Ausführungsform eines solchen Adsorbers ist schematisch in Fig. 1 dargestellt.

Mehrere dieser Rahmen können zur Behandlung größerer Abluftmengen lufttechnisch und elektrisch in zahlreichen sinnvollen Anordnungen verschaltet werden. Wegen der sehr schnellen elektrischen Aufheizung der Gewebe, die in weniger als einer Minute erfolgen kann, können sehr hohe Anreicherungsfaktoren von bis zu 1500 erreicht werden, die vorteilhaft sind, wenn zum Beispiel Lösemittel zurückgewonnen werden sollen.

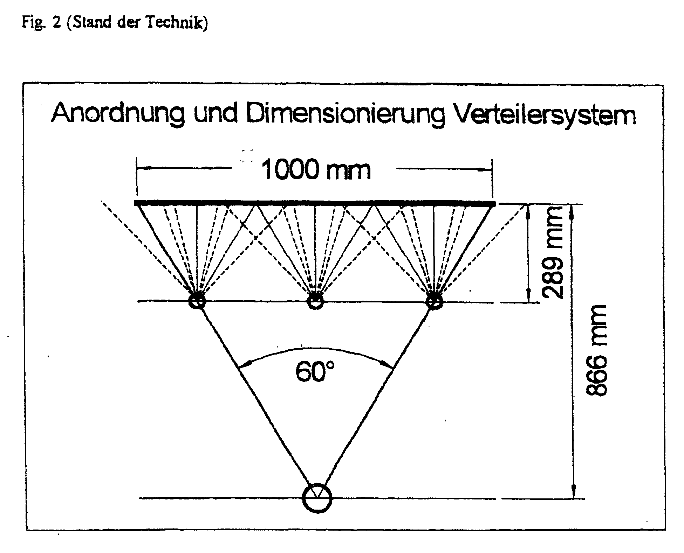

Nachteilig ist, dass ein großer Aufwand getrieben werden muß, um das Regenerationsgas gleichmäßig über die Filterfläche zu verteilen. So beträgt die Regenerationsgasgeschwindigkeit, bezogen auf die Filterfläche im obigen Beispiel, eines 1 m x 3 m ―Filters nur 0,01 m/s. Bei dieser Strömungsgeschwindigkeit ergibt sich durch zum Beispiel fünf Lagen Aktivkohlefasergewebe ein Druckverlust von nur 10 Pa, so dass beim Auftreffen des Regenerationsgases auf das Filter das Gas schon gleichmäßig verteilt sein muß. Dies kann zum Beispiel erreicht werden durch ein System von Verteilerrohren mit über die Höhe und den Querschnitt verteilten zahlreichen Bohrungen, aus denen das Regenerationsgas im Freistrahl austritt (Fig. 2).

Bei einer großen zu behandelnden Luftmenge, d.h. einer Vielzahl von Filterrahmenmodulen, sind deshalb entweder eine große Zahl (3 x Anzahl der Filterrahmen) Verteilerrohre zu installieren oder der Abstand zwischen einem Verteilerrohr und dem Filter muß sehr groß gewählt werden (0,87 m), was das Bauvolumen der Apparate unwirtschaftlich vergrößert.

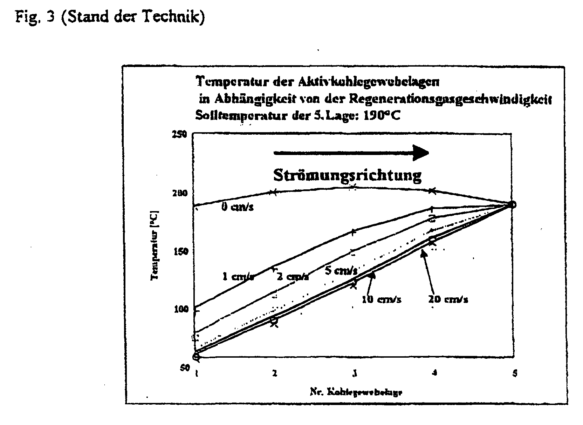

Weiterhin ist nachteilig, dass auch bei diesem Verfahren der elektrischen Regeneration die Desorptionsgasaufheizung durch Wärmeübertrag vom elektrisch aufgeheizten Gewebe auf die Luft stattfindet, mit den oben beschriebenen negativen Folgen auf die Wirksamkeit des Abluftreinigungsverfahrens durch Ausbildung eines Temperaturgradienten. Beim Einsatz von Aktivkohlefasergewebe wirkt sich dies, wie Fig. 3 zeigt, wegen der geringen Mengen der eingesetzten Kohle noch wesentlich stärker aus als bei Granulatkohle, wo zur Behandlung der gleichen Abluftmengen die mehr als 100-fache Menge Aktivkohle eingesetzt wird. Folge dieses starken Temperaturgradienten ist, dass bei der Regeneration gerade die für die Feinreinigung der Abluft wichtigen, in Regenerationsrichtung gesehen ersten Gewebelagen, nicht optimal regeneriert werden, was sich in einer Verkürzung der Beladestandzeiten und in einer Verschlechterung der erreichbaren Reingaskonzentrationen beim nachfolgenden Beladen bemerkbar macht. Dieser negative Effekt wirkt sich natürlich umso stärker aus, je höher die Regenerationsgasgeschwindigkeiten sind.

Weiterhin ist nachteilig, dass, wie aus der nachfolgenden Tabelle hervorgeht, bei höheren Desorptionsgasgeschwindigkeiten die erforderliche elektrische Heizleistung drastisch mit zunehmender Desorptionsgasgeschwindigkeit ansteigt. Dies hat zur Folge, dass aus wirtschaftlichen Gründen bei elektrisch regenerierten Adsorbern aus Aktivkohlefasergewebe die Regenerationsgasgeschwindigkeiten so gering wie möglich gehalten werden, was wiederum die Installation eines aufwendigen Regenerationsgasverteilersystems erforderlich macht.

| **Elektrischer Leistungsbedarf beim Regenerieren von Aktivkohle- fasergewebe in Abhängigkeit von der Regenerationsgeschwin- digkeit** | | | | | | |
|---|---|---|---|---|---|---|
| Desorptionsgasgeschwindigkeit (cm/s) | 0 | 1 | 2 | 5 | 10 | 20 |
| Gesamte elektrische Heizleistung (kW/m²) | 3,1 | 5,2 | 7,5 | 14,4 | 26,2 | 49,4 |

Schließlich ist bei diesem Verfahren nachteilig, dass die Regelung der Temperatur des Aktivkohlegewebes, die auch aus sicherheitstechnischen Gründen von essentieller Bedeutung für den praktischen Einsatz des Verfahrens ist, sehr schwierig ist. Der Grund für dieses Problem liegt u.a. darin, dass die Wärmeleitfähigkeit und die Wärmekapazität von Aktivkohlefasergewebe sehr gering ist, so dass herkömmliche Verfahren der Temperaturmessung, wie zum Beispiel mit elektrisch isolierten Thermoelementen, nur stark zeitverzögert reagieren und zudem der "Messwert" mit sehr starken Fehlern behaftet ist, weil er davon abhängt, wie gut der (zufällige) mechanische Kontakt zwischen Thermoelement und Gewebe ist. Da die Aufheizzeit des Gewebes von Raumtemperatur zum Beispiel auf 200°C nur etwa eine Minute beträgt und zudem der elektrische Widerstand von Aktivkohlegewebe einen negativen Temperaturkoeffizienten hat, besteht bei diesem Verfahren eine große Gefahr der Überhitzung des Aktivkohlegewebes.

Bei beiden bekannten Verfahren der elektrischen Regeneration von Adsorbentien schließt sich der Kühlschritt an, bei dem das Adsorbens durch Durchleiten von Luft oder Inertgas auf die Temperatur gekühlt wird, wie sie für den nachfolgenden Beladeschritt erforderlich ist.

Aufgabe der Erfindung ist es deshalb, ein Verfahren der elektrischen Regenerierung von elektrisch leitfähigen Adsorbentien, insbesondere von Aktivkohlefasergeweben, zu finden, das einerseits die Vorzüge der elektrischen Regenerierung im Vergleich zu herkömmlichen Regenerationsverfahren, wie Inertgasregeneration und Wasserdampfregeneration, aufweist, wie
- sehr kurze Desorptionszeiten,
- sehr kurze Aufheizzeiten,
- sehr große Anreicherungsfaktoren bei der Regeneration,
- bei Bedarf Regenerationstemperaturen bis 300°C,
- bei faserförmigen Sorbentien extrem schnelle Kinetik des Stoffübergangs aus der Gas- in die Sorbensphase,
- gute Wirtschaftlichkeit, weil bei den Verfahren mit elektrischer Regeneration nur die Aktivkohle und das Regenerationsgas und nicht Rohrleitungen, Behälter und sonstige Anlagenteile aufgeheizt werden,
   aber nicht die Nachteile der herkömmlichen Verfahren zur elektrischen Regeneration von Adsorbentien aufweist, wie sie oben beschrieben wurden, also insbesondere:
- auch große Desorptionsgasgeschwindigkeiten von wesentlich mehr als 2 cm/s ermöglicht, ohne dass der elektrische Anschlusswert zum Aufheizen des Adsorbens wesentlich größer ist als bei Desorptionsgasgeschwindigkeiten unter 1 cm/s. Dies ist insbesondere wünschenswert, wenn als Regenerationsgas Luft verwendet wird und diese Regenerationsluft nicht weiter gereinigt werden muß, wie zum Beispiel bei der Aufgabe, die Zuluft von Gebäuden von in der Außenluft vorhandenen gasförmigen Substanzen zu befreien,
- keine aufwendige Vorrichtung für die gleichmäßige Verteilung des Regenerationsgases über die Anströmfläche des Filters erfordert, so dass zum einen der apparative Aufwand für diese Verteilungseinrichtung entfällt und zum anderen der Platzbedarf derartiger Filter gegenüber der herkömmlichen Bauweise wesentlich reduziert wird,
- das Regenerationsverfahren intrinsisch sicher gegen Überhitzung oder Brand der Aktivkohlefaser ist, d.h. keine Temperaturregelung der elektrischen Leistung erforderlich ist.

Erfindungsgemäß wird diese Aufgabe gelöst durch ein Regenerationsverfahren gemäß den Patentansprüchen 1 bis 7.

Dies soll anhand des folgenden Beispiels, das auf Messwerten einer Versuchsanlage beruht, und bei dem alle Kennzeichen des erfindungsgemäßen Verfahrens angewandt wurden, erläutert werden.

In einer Laborversuchsanlage, die für Luftmengen von 0 bis 30 m³/h dimensioniert ist, wurden gemäß den nachfolgenden Darstellungen Versuche zur Adsorption und Desorption mit Intervalltaktung während der Desorption durchgeführt.

Es zeigen
- Fig. 4: eine geschnittene Darstellung des erfindungsgemäßen Adsorbers,
- Fig. 5: die damit erzielte Durchbruchkurve Toluol,
- Fig. 6 und Fig. 7: schematische Darstellungen der Desorption über das Verteilerrohr und ohne das Verteilerrohr,
- Fig. 8 bis Fig. 11: die zeitlichen Abläufe der getakteten Desorption.

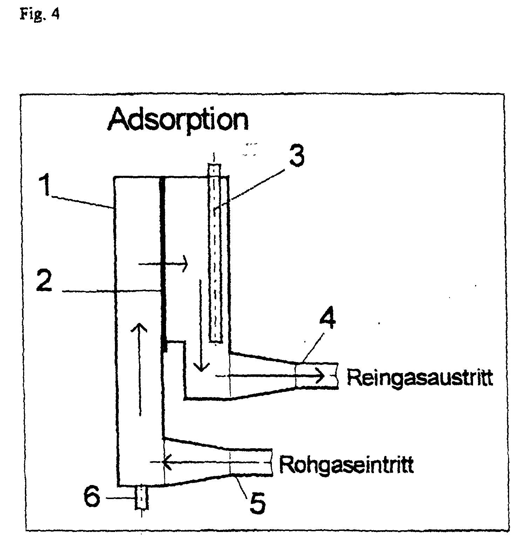

Wie in Fig. 4 dargestellt, erfolgte die Beladung im Laboradsorber 1 in dargestellter Richtung von der Rohgasleitung 5 kommend über das Filter 2 zur Reingasleitung 4. Dabei waren fünf Lagen ACF im Filterrahmen eingespannt. Die zu- und abführenden Leitungen 3 und 6 sind während der Beladephase geschlossen. Die Beladekonzentration wurde bei etwa 40 mg/m³ für das Lösemittel Toluol gewählt, wobei die relative Feuchte des Rohgases bei einer Temperatur von 23°C auf 50 % gehalten wurde.

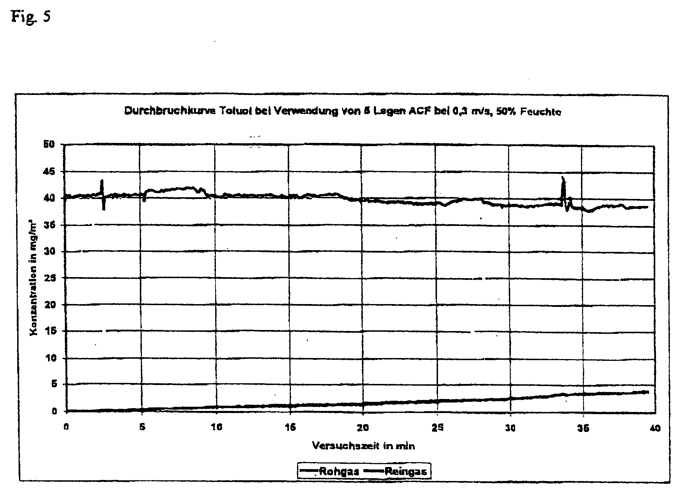

Die Geschwindigkeit am Filter, dessen freie Filterfläche bei 0,07 m Breite und 0,21 m Höhe lag, betrug 0,3 m/s. Gefahren wurden die Versuche bis zu einer Durchbruchskonzentration von 10 % der Rohgaskonzentration (Fig. 5). Die gewählte Durchbruchskonzentration war 4 mg/m³, die nach etwa 40 min erreicht wurde.

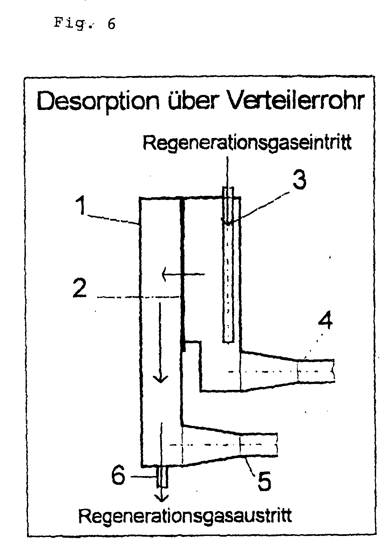

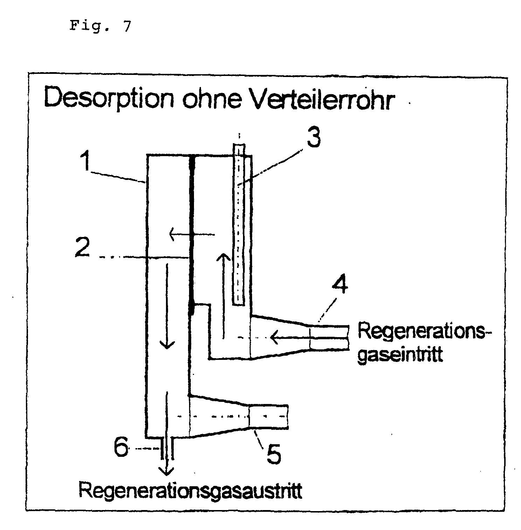

Bei der sich anschließenden Desorption erfolgte die Luftführung in entgegengesetzter Richtung zur Adsorption, wobei in Abhängigkeit von der Gasgeschwindigkeit entweder über das Desorptionsrohr 3 oder die normale Rohrleitungsführung 4 das Desorptionsgas eingeleitet wurde (s. Fig. 6 und 7). Die Regenerationsluft wurde über die Regenerationsluftleitung 6 abgeführt. Während der gesamten Regeneration, die aus den beiden Teilschritten Aufheizen und Desorbieren/ Kühlen besteht, ist die Rohrgasleitung 5 immer geschlossen.

Die Messung der Temperatur während der Desorption erfolgte mittels IR-Messung berührungslos auf der Filteroberfläche und mit speziell präparierten Thermoelementen zwischen den Filterlagen.

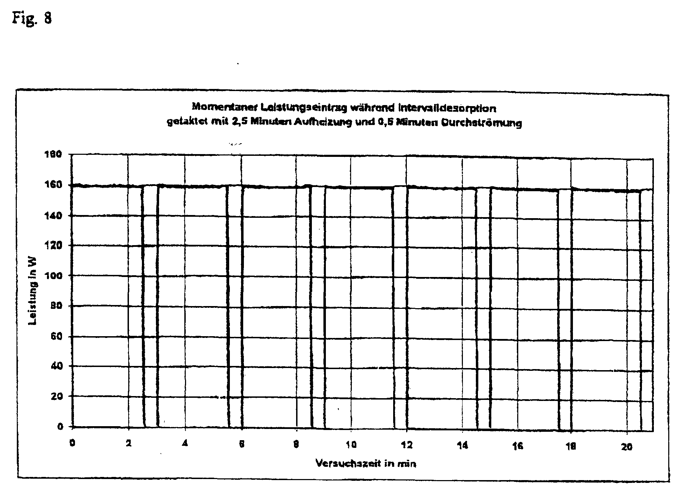

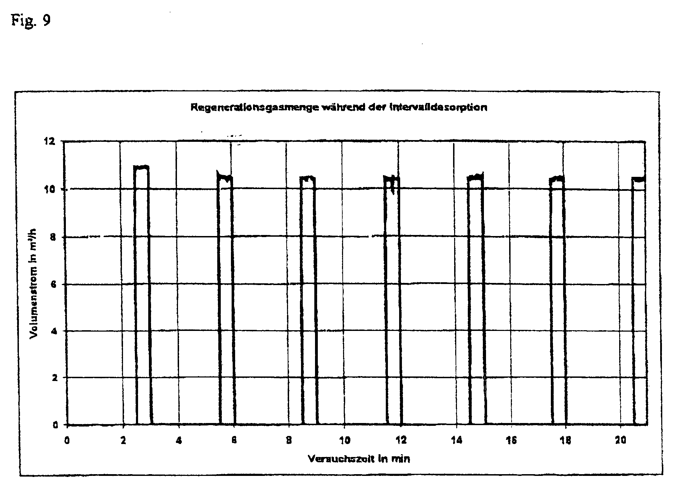

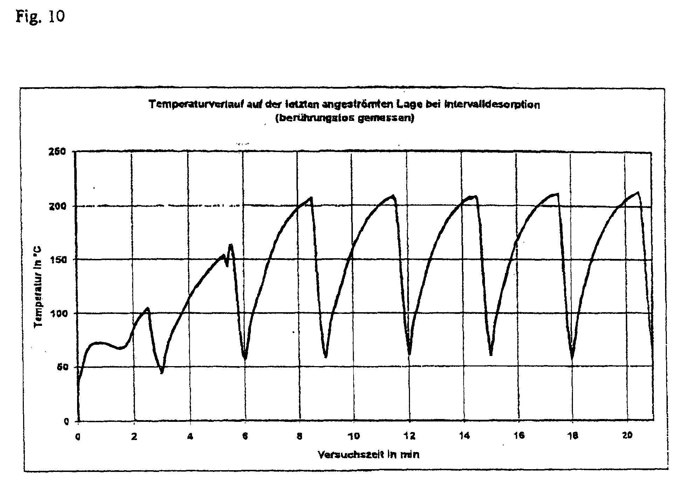

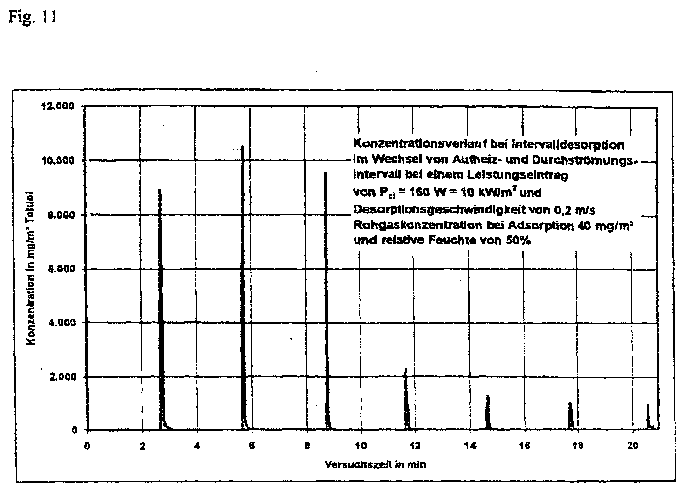

Die getaktete Desorption wurde wie folgt (s. Fig. 8 bis 11) durchgeführt:
- Aufheizung des Filtermaterials durch direkte elektrische Beheizung bei konstanter Leistungszufuhr über eine Zeit von 2,5 Minuten. Dabei waren die Ventile am Adsorber geschlossen.
- Nach 2,5 Minuten Stoppen der elektrischen Leistungszufuhr, Öffnen der Ventile am Adsorber des Filters über 0,5 Minuten. Während dieser Zeit erfolgt der Abtransport des desorbierten Lösemittels, des desorbierten Wassers sowie eine Temperaturverringerung am Filter. Nach 0,5 Minuten Schließen der Ventile am Adsorber.
- Aufheizung des Filtermaterials durch direkte elektrische Beheizung bei konstanter Leistungszufuhr über eine Zeit von 2,5 Minuten.

Durch diese zeitliche Taktung und Verfahrensführung erfolgte insgesamt jeweils sieben Mal für das Aufheizen und Durchströmung, danach wurde abgebrochen und es konnte ein weiterer Adsorptionsvorgang beginnen.

Die bei den ersten beiden Intervallen erreichten geringeren Temperaturen während des Aufheizens am Filter sind bedingt durch die vorrangig stattfindende Desorption des adsorbierten Wassers auf der ACF. Ab dem dritten Intervall wurden dann die stationären Temperaturen für die entsprechende Leistungszufuhr und Zeit erreicht.

Überraschend wurde nun festgestellt, dass mit dieser intervallmäßigen Regenerierung das Aktivkohlefasergewebe mit nur sieben Intervallen weitgehend desorbiert werden kann, obwohl während der eigentlichen Desorptionszeit ― die identisch ist mit der Kühlzeit ― keine elektrische Heizleistung zugeführt wurde, diese Zeit sehr kurz warzum Beispiel nur 30 Sekunden bei einer Regenerationsluftgeschwindigkeit von 20 cm/s ― sowie in dieser Zeit die Temperatur der Aktivkohlefasergewebe von ursprünglich 220°C auf ca. 40°C sank. Bei der nachfolgenden Beladephase wurde wieder die gleiche Standzeit erreicht; dies zeigt, dass ein stationärer Zustand vorlag, d.h. dass bei der Intervalldesorption die gleiche Menge Toluol desorbiert wurde, wie vorher in der Beladephase adsorbiert wurde.

Überraschend, und für das vorgeschlagene Verfahren sehr vorteilhaft, wurde weiterhin gefunden, dass bei dem erfindungsgemäßen Regenerationsverfahren die Regenerationsgasgeschwindigkeit in weitem Bereich praktisch keinen Einfluß auf die Desorptionsqualität, den Verbrauch an elektrischer Energie bzw. die elektrische Anschlussleistung und auf die Reingasqualität bei der nachfolgenden Beladephase hat, wenn die Anzahl der Desorptionsintervalle unverändert bleibt. Dies verdeutlicht die folgende Tabelle:

| **Regenerationsgasgeschwindigkeit (cm/s)** | **5** | **10** | **20** |
|---|---|---|---|
| Regenerationsgasverteiler | ja | nein | nein |
| Anzahl Desorptionsintervalle | 7 | 7 | 7 |
| Elektrische Heizleistung (kW) | 0,16 | 0,16 | 0,16 |
| Energieeintrag pro Desorptionsintervall (kJ) | 24 | 24 | 24 |
| Maximale Desorptionsgaskonzentration (g/m³) | 10,2 | 11,5 | 10,5 |
| Rohgaskonzentration (mg/m³ Toluol) | 40 | 40 | 40 |
| Relative Feuchte (%) | 50 | 50 | 50 |
| Reingaskonzentration zu Beginn der nachfolgenden Beladephase (mg/m3 Toluol) | 0,1 | 0,18 | 0,13 |
| Standzeit bis zur Durchbruchskonzentration von 10 % der Rohgaskonzentration (min) | 44 | 39 | 40 |

## Patentansprüche

1. Verfahren zur Regenerierung von mit organischen Substanzen beladenen elektrisch leitfähigen Adsorbentien, die durch Durchleitung von elektrischem Strom aufgeheizt werden,
**dadurch gekennzeichnet, dass** abwechselnd zeitlich nacheinander das Adsorbens durch Durchleitung von elektrischem Strom aufgeheizt wird, wobei kein Spülgasstrom durch das Adsorbens geführt wird und anschließend bei abgestelltem elektrischen Strom ein Spülgasstrom durch das Adsorbens geleitet wird, wodurch gleichzeitig die adsorbierten organischen Substanzen ausgetrieben werden und das Adsorbens gekühlt wird.

2. Verfahren nach Anspruch 1,
**dadurch gekennzeichnet, dass** die beiden Teilschritte Aufheizen und Desorbieren/Kühlen zeitlich nacheinander mehrmals wiederholt werden.

3. Verfahren nach Anspruch 1 oder 2,
**dadurch gekennzeichnet, dass** der Schritt Aufheizen für eine vorgegebene feste Zeit erfolgt.

4. Verfahren nach Anspruch 3,
**dadurch gekennzeichnet, dass** die feste vorgegebene Heizzeit in der Weise berechnet wird, dass es die Zeit ist, die minimal benötigt wird, um bei einer gegebenen elektrischen Heizleistung das völlig unbeladene Adsorbens auf eine vorgegebene Maximaltemperatur aufzuheizen.

5. Verfahren nach einem der Ansprüche 1 bis 4,
**dadurch gekennzeichnet, dass** die Leerrohrgeschwindigkeit durch das Adsorbens 0,1 bis 0,5 m/s beträgt.

6. Verfahren hach einem der Ansprüche 1 bis 5,
**dadurch gekennzeichnet, dass** das Adsorbens aus faserförmiger Aktivkohle besteht, die in Form von Vliesen, Geweben oder Gestricken vorliegt.

7. Verfahren nach einem der Ansprüche 1 bis 3,
**dadurch gekennzeichnet, dass** die vorgegebenen Zeiten so gewählt werden, dass adsorbierte Gemische gemäß ihrer Flüchtigkeit nacheinander desorbiert und aufgefangen werden.
